# EUROPEAN PATENT SPECIFICATION

(11) **EP 1 589 385 B1**
(45) Date of publication and mention of the grant of the patent: **04.04.2012**
(21) Application number: 05008800.4
(22) Date of filing: 21.04.2005
(51) Int. Cl.: G04G 13/02

(54) **Method for setting up a wake-up alarm of a mobile communication terminal**
Verfahren zum Einstellen des Erwachungssignales von einem mobilen Kommunikationsendgerät
Méthode pour le réglage du signal de réveil d' un terminal de communication mobile

(30) Priority: 22.04.2004 KR 2004027951
(43) Date of publication of application: 26.10.2005
(73) Proprietor: LG Electronics Inc., Youngdungpo-gu Seoul (KR)
(72) Inventor: Choi, Won-Ho, Suwon, Gyeonggi-Do (KR)
(74) Representative: TER MEER - STEINMEISTER & PARTNER GbR

(56) References cited:
- JP-A- 58 189 579
- US-A- 5 442 600
- US-A1- 2003 142 591
- US-B1- 6 477 117

## Description

### BACKGROUND OF THE INVENTION

### 1. Field of the Invention

The present invention relates to a mobile communication terminal, and particularly, to a method for setting up an alarm and subsequent follow-up alarms of a mobile communication terminal.

### 2. Description of the Background Art

In general, a mobile communication service provider provides a user with functions related to communications, such as allowing wireless Internet connections, performing text and multimedia message transmissions, accessing wireless on-line games, or the like. However, a mobile communication terminal manufacturer also provides the user with functions that are performed by the mobile communication terminal itself, without being related to the communication functions provided by the service provider. For example, the manufacturer can equip the terminal to perform such functions as storing a phone-book, a memo keeper, a schedule organizer, a calculator, and an alarm function, such as a wake-up alarm/call (morning call).

The alarm function may include a snooze function, which provides follow-up alarms after a period of time, if the user does not cancel the alarm, but only activates a snooze function of the terminal. The snooze function prevents the user from continuously sleeping or falling back to sleep, after stopping the alarm that rings (or provides another type of output to wake the user) at the user's set designated wake-up time. By the snooze function, when the user initially stops the alarm, the alarm rings again after a predetermined time (e.g., five minutes).

The mobile communication terminal outputs the alarm (e.g., by providing an alarm sound) at the wake-up time set by the user. During the alarm, if the user temporarily stops the alarm, by opening and closing a folding flap of the terminal or pressing a certain key without properly canceling (e.g. releasing) the wake-up alarm/call, a follow-up alarm is outputted after predetermined periods of time (e.g., every 5 minutes), in accordance with the snooze function.

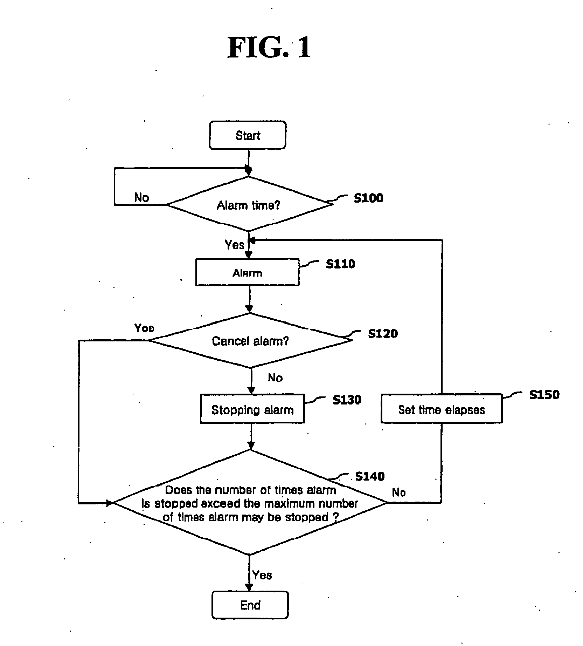

Figure 1 illustrates a flow chart showing a method for controlling a wake-up call of a mobile communication terminal, in accordance with the background art. As shown, when a wake-up time, that the user previously set in a mobile communication terminal, has been reached, a wake-up call alarm starts to sound as a bell sound (melody) (S100 and S110). When the wake-up call is output (rings), the user normally cancels the wake-up alarm/call or temporarily stops the alarm. If the user opens and closes the folding flap of the terminal or presses a certain key, the wake-up call is not completely canceled but only the alarm sound is stopped (S120 and S130).

When the alarm is stopped by the user more than once, the mobile communication terminal determines whether the number of times the alarm is stopped exceeds a pre-set maximum number of times the alarm may be stopped (S140). If the determination shows that the number exceeds the maximum number of times, the wake-up call alarm is stopped and the wake-up call is actually canceled. However, if the number of times that the alarm is stopped does not exceed the maximum number of times, the wake-up call alarm sounds again after a snooze time, stored in the terminal as a default time value by the manufacturer of the terminal (S150, and S110).

The background art method, described as above, has drawbacks. The snooze time interval is set and stored by the manufacturer of the terminal. There is no provision to allow the user/owner of the terminal to set a custom snooze time interval or progressive snooze time intervals. Therefore, the convenience and flexibility of the terminal is reduced. Also, the manufacturer sets the buzzer or alarm sound associated with the wake-up alarm and the snooze alarm. There is no provision to allow the user/owner of the terminal to set a custom sound for the wake-up alarm and/or snooze (e.g. follow-up) alarm, which may be different from each other, e.g. progressively louder.

US 5,442,660 A refers to a snoozer-timer device, which enables the user to select the length of time he wishes to sleep beyond the alarm time. The snooze-timer device includes a housing having a display unit and a button-type switch, a central processing unit, a clock, and a memory. Preferably, the central processing unit, clock and memory are contained in a single microprocessor chip.

US 6,477,117 B1 refers to a wearable mobile computing device/appliance (a wrist watch) with a high resolution display that is capable of wirelessly accessing information from a network and a variety of other devices. The mobile computing device/appliance includes a user interface that is used to efficiently interact with alarms and notifications on the watch.

US 2003/142591 A1 discloses an interactive alarm clock and method, wherein the alarm clock is programmable by a user so that distinct alarm signals can be designated.

### SUMMARY OF THE INVENTION

Therefore, it is an object of the present invention to overcome one or more of the drawbacks associated with the background art.

It is an object of the present invention to provide a method for setting an alarm function of a mobile communication terminal enabling a user to quickly and easily set a snooze time, or follow-up alarm time interval.

It is an object of the present invention to provide a method for setting an alarm function of a mobile communication terminal enabling a user to pick an alarm sound for the initial alarm and/or follow-up alarm at the user's discretion.

Objects of the present invention are achieved by subject matters of the independent claims.

The foregoing and other objects, features, aspects and advantages of the present invention will become more apparent from the following detailed description of the present invention when taken in conjunction with the accompanying drawings.

### BRIEF DESCRIPTION OF THE DRAWINGS

The accompanying drawings, which are included to provide a further understanding of the invention and are incorporated in and constitute a unit of this specification, illustrate embodiments of the invention and together with the description serve to explain the principles of the invention.

In the drawings:
Figure 1 illustrates a flow chart of a method for controlling a wake-up alarm and follow-up alarms of a mobile communication terminal, in accordance with the background art; and
Figure 2 illustrates a flow chart of a method for controlling a wake-up alarm and follow-up alarms of a mobile communication terminal, in accordance with the present invention.

### DETAILED DESCRIPTION OF THE PREFERRED EMBODIMENTS

Reference will now be made in detail to the preferred embodiments of the present invention, examples of which are illustrated in the accompanying drawings.

An aspect of the present invention is to provide a method for improving the convenience of a wake-up alarm of a mobile communication terminal by permitting a user to easily and quickly set a desired snooze time interval until a follow-up alarm is given. Previously, the snooze time interval was fixed and set as a default value by a terminal manufacturer. Another aspect of the present invention allows a user to voluntarily select a bell sound, ringing sound or any other sound or melody associated with the initial wake-up alarm and/or the follow-up alarms, as desired by the user.

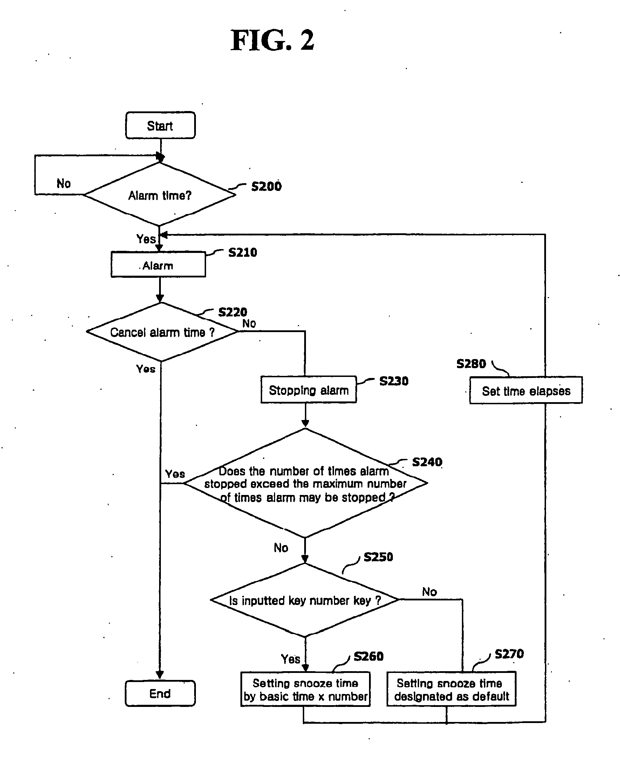

Figure 2 illustrates a flow chart of an exemplary method for setting a wake-up alarm of the mobile communication terminal, in accordance with the present invention. First, a user interacts with a menu of the mobile communication terminal to store several desired parameters. For example, the user sets a desired wake-up alarm time, the user selects a desired sound for the initial wake-up alarm; and the user selects a basic time interval for use in calculating a snooze time, as will be described in more detail to follow. As illustrated in Figure 2, in Step S200, a timer provided in the terminal monitors for the set wake-up time. When the wake-up time set by the user is reached, in step S210, the initial wake-up alarm is outputted using the user's selected output format (e.g. bell sound, ringing sound, buzzer sound, vibration or melody).

When the initial alarm is outputted, the user has the option of canceling the initial alarm or temporarily stopping the initial alarm. If the initial alarm is canceled, no follow-up alarm will be issued by the terminal. If the alarm is merely stopped, a follow-up alarm will be issued by the terminal after the passing of a snooze time interval. In step S220, it is checked whether or not the user canceled the alarm. If the user presses (selects or inputs) a certain key (e.g., a cancel key or a '0' key), the wake-up call alarm is canceled. However, if the user opens and closes a flap of the terminal (e.g. a flap including an display which normally covers a keypad of the terminal) or presses another key (e.g., not the cancel key and the '0' key), the wake-up call is not completely canceled and the alarm is only stopped temporarily (step S230).

In step S240, it is determined whether or not the alarm has been stopped more than a pre-set maximum number of times. Once, the mobile communication terminal determines that the number of times the alarm has been stopped (e.g., by pressing other than the cancel key or the '0' key) exceeds the pre-set maximum number of times the alarm may be stopped, the alarm is completely canceled.

If the result of step S240 shows that the number of times the alarm has been stopped does not exceed the pre-set maximum number of times, the mobile communication terminal determines whether a key inputted by the user is a number key in step S250. If step S250 shows that the key that the user inputted on the mobile communication terminal to stop the alarm was a number key (excluding the '0' key), the terminal sets a certain time (e.g., a basic time preset in the terminal multiplied by the value of the number key selected by the user) as a snooze time interval, in step S260. Alternatively, the snooze time interval may be calculated by other methods, such as adding the basic time with the value of the number key selected by the user.

If the user opens and closes the flap of the terminal to stop the alarm or inputs another key which is not a number key, a default time is set as a snooze time in step S270. The default time can be equal to the basic time preset in the terminal.

After the snooze time interval elapses (step S280), the mobile communication terminal outputs a follow-up alarm (step S210), and the aforementioned process (steps S220~S240) are performed again. If the number of times the alarm is stopped exceeds the maximum number of times the alarm may be stopped at step S240, the wake-up call is canceled.

As described above, the present invention allows the user to quickly select a desired snooze time interval. Therefore, if the user desires a five minute snooze time, a ten minute snooze time, a fifteen minute snooze time, or a thirty minute snooze time, such could be quickly accomplished at the time of the initial alarm by pressing the number keys "1", "2", "3", or "6" respectively (assuming that the basic time preset in the terminal is five minutes and that the basic time is multiplied by the value of the number key pressed). Alternatively, if the user desires an eleven minute snooze time, a twelve minute snooze time, a fifteen minute snooze time, or a nineteen minute snooze time, such could be quickly accomplished at the time of the initial alarm by pressing the number keys "1", "2", "5", or "9" respectively (assuming that the basic time preset in the terminal is ten minutes and that the basic time is added to the value of the number key pressed).

The basic time interval, stored in the terminal, may be initially set by the mobile terminal manufacturer to a value such as five minutes or ten minutes.

However, in an alternate embodiment of the present invention, the basic time interval is set by the user of the terminal as a setup menu option.

In the setup menu, the user could also select the alarm output format of the initial wake-up alarm and/or the follow-up alarms. For example, the alarm output format could be selected from various bell sounds, ring tones, buzzers, melodies, or a vibrate mode. Also, the user could select different alarm output formats for the initial alarm as compared to the follow-up alarm. For instance, the initial alarm could be a soothing melody, the first follow-up alarm could be an aggressive melody, and the third and subsequent follow-up alarms could be buzzers. Also, the user could select the volume level for the initial and subsequent follow-up alarms. For instance, the initial alarm could be moderate in volume, and the follow-up alarms could be sequentially louder in volume.

As the present invention may be embodied in several forms without departing from the essential characteristics thereof, it should also be understood that the above-described embodiments are not limited by any of the details of the foregoing description, unless otherwise specified, but rather should be construed broadly within its scope as defined in the appended claims, and therefore all changes and modifications that fall within the metes and bounds of the claims, or equivalence of such metes and bounds are therefore intended to be embraced by the appended claims.

## Claims

1. A method of providing time-based alarms for a mobile communication terminal, the method comprising:
outputting (S210) an initial alarm;
receiving an input of a user selected key or action upon the mobile communication terminal, while the initial alarm is outputted;
setting (S260, S270) a follow-up alarm time interval based upon a basic time interval and the received input of the user selected key or action upon the mobile communication terminal, wherein:
when the user selected key is a number key, the follow-up alarm time interval is set (S260) by multiplying or by adding a value associated with the user selected key with the basic time interval; and
when the user selected key is not a number key or the user opens and closes a flap of the mobile communication terminal, the follow-up alarm time interval is set (S270) to be equal the basic time interval;
waiting for a duration of the follow-up alarm time interval; and
outputting (S210) a follow-up alarm.

2. The method of claim 1, further comprising the steps of:
receiving a second input of a user selected key or action upon the mobile communication terminal, while the follow-up alarm is outputted;
setting a second follow-up alarm time interval based upon the basic time interval and the second received input of the user selected key or action upon the mobile communication terminal;
waiting for a duration of the second follow-up alarm time interval; and
outputting a second follow-up alarm.

3. The method of claim 1, wherein the basic time interval is stored in the mobile communication terminal and set by the manufacturer of the mobile communication terminal.

4. The method of claim 1, wherein the basic time interval is stored in the mobile communication terminal and selected by the user of the mobile communication terminal using a menu option.

5. The method of claim 1, wherein the initial alarm is canceled when the user selected key is a wake-up alarm cancel key or a '0' key.

6. The method of claim 1, wherein the initial alarm and the follow-up alarm are audible sounds.

7. The method of claim 6, wherein the audible sound of the initial alarm or the follow-up alarm is selected by the user.

8. The method of claim 6, wherein the volume of the audible sound of the initial alarm or the follow-up alarm is selected by the user.

9. The method of claim 6, wherein the audible sound of the initial alarm is selected by the user, and wherein the audible sound of the follow-up alarm is different from the audible sound of the initial alarm and selected by the user.

10. The method of claim 1, wherein at least one of the initial alarm and the follow-up alarm is a vibration of the mobile communication terminal.

11. The method of claim 1, wherein the outputting (S210) the initial alarm comprises:
receiving a user's input of a desired alarm time for outputting an initial alarm;
receiving a user's input of a desired alarm output format for outputting the initial alarm, wherein the user's desired alarm output format is selected in the mobile communication terminal from a plurality of different sounds and wherein the plurality of different sounds includes a plurality of different melodies, different bell or buzzer sounds and a vibration of the mobile communication terminal, itself; and
outputting the initial alarm at the user's desired alarm time in the form of the user's desired alarm output format.

12. The method of claim 11, further comprising receiving a user's input of a desired output volume for the initial alarm.

13. The method of claim 11, further comprising receiving a user's input of a desired alarm output format for outputting a follow-up alarm, wherein the user's desired alarm output format may be selected from a plurality of different sounds, and may be selected to be different from the alarm output format of the initial alarm.

14. The method of claim 12, further comprising receiving a user's input of a desired output volume for the follow-up alarm.

15. A mobile communication terminal configured for providing time-based alarms, wherein the mobile communication terminal is adapted to:
output an initial alarm;
receive an input of a user selected key or action upon the mobile communication terminal, while the initial alarm is outputted;
set a follow-up alarm time interval based upon a basic time interval and the received input of the user selected key or action upon the mobile communication terminal, wherein:
when the user selected key is a number key, the mobile communication terminal is adapted to set the follow-up alarm time interval by multiplying or by adding a value associated with the user selected key with the basic time interval; and
when the user selected key is not a number key or the user opens and closes a flap of the mobile communication terminal, the mobile communication terminal is adapted to set the follow-up alarm time interval to be equal the basic time interval;
wait for a duration of the follow-up alarm time interval; and
output a follow-up alarm.

16. The mobile communication terminal of claim 15 wherein the mobile communications terminal is further adapted to:
receive a user's input of a desired alarm time for outputting an initial alarm;
receive a user's input of a desired alarm output format for outputting the initial alarm, wherein the user's desired alarm output format is selected in the mobile communication
terminal from a plurality of different sounds and wherein the plurality of different sounds includes a plurality of different melodies, different bell or buzzer sounds and a vibration of the mobile communication terminal, itself; and
output the initial alarm at the user's desired alarm time in the form of the user's desired alarm output format.

## Patentansprüche

1. Verfahren zum Schaffen zeitabhängiger Alarme für ein Mobilkommunikationsendgerät, wobei das Verfahren umfasst:
Ausgeben (S219) eines Anfangsalarms;
Empfangen einer Eingabe einer vom Anwender ausgewählten Taste oder Aktion auf dem Mobilkommunikationsendgerät, während der Anfangsalarm ausgegeben wird;
Einstellen (S260, S270) eines Intervalls für eine Folge-Alarmzeit anhand eines Basiszeitintervalls und der empfangenen Eingabe der vom Anwender ausgewählten Taste oder Aktion auf dem Mobilkommunikationsendgerät, wobei:
dann, wenn die vom Anwender ausgewählte Taste eine Zifferntaste ist, das Intervall für die Folge-Alarmzeit durch Multiplizieren oder Addieren des zur vom Anwender ausgewählten Taste gehörenden Wertes mit dem Basiszeitintervall gesetzt wird (S260); und
dann, wenn die vom Anwender ausgewählte Taste keine Zifferntaste ist oder der Anwender eine Klappe des Mobilkommunikationsendgeräts öffnet und schließt, das Intervall für die Folgealarmzeit gleich dem Basiszeitintervall gesetzt wird (S270);
Warten für die Zeitdauer des Interfalls für die Folgealarmzeit; und
Ausgeben (S210) eines Folgealarms.

2. Verfahren nach Anspruch 1, das ferner die folgenden Schritte umfasst:
Empfangen einer zweiten Eingabe einer vom Anwender ausgewählten Taste oder Aktion auf dem Mobilkommunikationsendgerät, während der Folgealarm ausgegeben wird;
Einstellen eines zweiten Intervalls für eine Folge-Alarmzeit anhand eines Basiszeitintervalls und der zweiten empfangenen Eingabe der vom Anwender ausgewählten Taste oder Aktion auf dem Mobilkommunikationsendgerät;
Warten für die Zeitdauer des zweiten Intervalls für die Folgealarmzeit; und
Ausgeben eines zweiten Folgealarms.

3. Verfahren nach Anspruch 1, wobei das grundlegende Zeitintervall im Mobilkommunikationsendgerät gespeichert wird und vom Hersteller des Mobilkommunikationsendgeräts eingestellt wird.

4. Verfahren nach Anspruch 1, wobei das grundlegende Zeitintervall im Mobilkommunikationsendgerät gespeichert wird und vom Anwender des Mobilkommunikationsendgeräts mit Hilfe einer Menüoption ausgewählt wird.

5. Verfahren nach Anspruch 1, wobei der Anfangsalarm abgebrochen wird, wenn die vom Anwender ausgewählte Taste eine Taste zum Abbrechen eines Weckalarms oder eine 'O'-Taste ist.

6. Verfahren nach Anspruch 1, wobei der Anfangsalarm und der Folgealarm hörbare Töne sind.

7. Verfahren nach Anspruch 6, wobei der hörbare Ton des Anfangsalarms oder des Folgealarms vom Anwender ausgewählt wird.

8. Verfahren nach Anspruch 6, wobei die Lautstärke des hörbaren Tons des Anfangsalarms oder des Folgealarms vom Anwender ausgewählt wird.

9. Verfahren nach Anspruch 6, wobei der hörbare Ton des Anfangsalarms vom Anwender ausgewählt wird und wobei der hörbare Ton des Folgealarms vom hörbaren Ton des Anfangsalarms verschieden ist und vom Anwender ausgewählt wird.

10. Verfahren nach Anspruch 1, wobei der Anfangsalarm und/oder der Folgealarm eine Vibration des Mobilkommunikationsendgeräts ist.

11. Verfahren nach Anspruch 1, wobei das Ausgeben (S210) des Anfangsalarms umfasst:
Empfangen einer Eingabe des Anwenders für eine gewünschte Alarmzeit für das Ausgeben des Anfangsalarms;
Empfangen einer Eingabe des Anwenders für ein gewünschtes Ausgabeformat für die Ausgabe des Anfangsalarms, wobei das gewünschte Alarm-Ausgabeformat des Anwenders im Mobilkommunikationsendgerät aus mehreren verschiedenen Tönen ausgewählt wird und wobei mehreren verschiedenen Töne eine Vielzahl verschiedener Melodien, verschiedener Klingeltöne oder Summtöne und eine Vibration des Mobilkommunikationsendgeräts selbst umfasst; und
Ausgaben des Anfangsalarms zur vom Anwender gewünschten Alarmzeit in der Form des vom Anwender gewünschten Alarm-Ausgabeformats.

12. Verfahren nach Anspruch 11, das ferner das Empfangen einer Eingabe des Anwenders einer gewünschten Ausgabelautstärke für den Anfangsalarm umfasst.

13. Verfahren nach Anspruch 11, das ferner das Empfangen einer Eingabe des Anwenders für ein gewünschtes Alarm-Ausgabeformat für die Ausgabe eines Folgealarms umfasst, wobei das vom Anwender gewünschte Alarm-Ausgabeformat aus mehreren verschiedenen Töne ausgewählt werden kann und so ausgewählt werden kann, dass es vom Alarm-Ausgabeformat des Anfangsalarms verschieden ist.

14. Verfahren nach Anspruch 12, das ferner das Empfangen einer Eingabe des Anwenders einer gewünschten Ausgabelautstärke für den Folgealarm umfasst.

15. Ein Mobilkommunikationsendgerät, das für das Anbieten von zeitabhängigen Alarmen ausgelegt ist, wobei das Mobilkommunikationsendgerät dazu ausgelegt ist:
einen Anfangsalarm auszugeben;
eine Eingabe einer vom Anwender ausgewählten Taste oder Aktion auf dem Mobilkommunikationsendgerät zu empfangen, während der Anfangsalarm ausgegeben wird;
ein Intervall für eine Folge-Alarmzeit anhand eines Basiszeitintervalls und der empfangenen Eingabe der vom Anwender ausgewählten Taste oder Aktion auf dem Mobilkommunikationsendgerät einzustellen, wobei:
dann, wenn die vom Anwender ausgewählte Taste eine Zifferntaste ist, das Mobilkommunikationsendgerät dazu ausgelegt ist, das Intervall für die Folge-Alarmzeit durch Multiplizieren oder Addieren des zur vom Anwender ausgewählten Taste gehörenden Wertes mit dem Basiszeitintervall einzustellen; und
dann, wenn die vom Anwender ausgewählte Taste keine Zifferntaste ist oder der Anwender eine Klappe des Mobilkommunikationsendgeräts öffnet und schließt, das Mobilkommunikationsendgerät dazu ausgelegt ist, das Intervall für die Folge-Alarmzeit gleich dem Basiszeitintervall einzustellen;
für eine Zeitdauer des Intervalls für die Folgealarmzeit zu warten; und
einen Folgealarm auszugeben.

16. Mobilkommunikationsendgerät nach Anspruch 15, wobei das Mobilkommunikationsendgerät ferner dazu ausgelegt ist:
eine Eingabe des Anwenders für eine gewünschte Alarmzeit für das Ausgeben des Anfangsalarms zu empfangen;
eine Eingabe des Anwenders für ein gewünschtes Ausgabeformat für die Ausgabe des Anfangsalarms zu empfangen, wobei das gewünschte Alarm-Ausgabeformat des Anwenders im Mobilkommunikationsendgerät aus mehreren verschiedener Töne ausgewählt wird und wobei mehreren verschiedenen Töne mehrere verschiedener Melodien, verschiedene Klingeltöne oder Summtöne und eine Vibration des Mobilkommunikationsendgeräts selbst umfassen; und
den Anfangsalarm zu der vom Anwender gewünschten Alarmzeit in der Form des vom Anwender gewünschten Alarm-Ausgabeformats auszugeben.

## Revendications

1. Procédé de fourniture d'alarmes basées sur le temps pour un terminal de communication mobile, le procédé comprenant les étapes suivantes :
délivrer (S210) une alarme initiale ;
recevoir une entrée d'une touche ou action sélectionnée par l'utilisateur sur le terminal de communication mobile, pendant que l'alarme initiale est émise ;
régler (S260, S270) un intervalle de temps d'alarme de rappel basé sur un intervalle de temps de base et sur l'entrée reçue de la touche ou action sélectionnée par l'utilisateur sur le terminal de communication mobile, dans lequel :
quand la touche sélectionnée par l'utilisateur est une touche de chiffre, l'intervalle de temps d'alarme de rappel est réglé (S260) en multipliant ou en additionnant une valeur associée à la touche sélectionnée par l'utilisateur avec l'intervalle de temps de base ; et
quand la touche sélectionnée par l'utilisateur n'est pas une touche de chiffre ou que l'utilisateur ouvre et ferme un clapet du terminal de communication mobile, l'intervalle de temps d'alarme de rappel est réglé (S270) pour être égal à l'intervalle de temps de base ;
attendre pendant une durée égale à l'intervalle de temps d'alarme de rappel ; et
délivrer (S210) une alarme de rappel.

2. Procédé selon la revendication 1, comprenant en outre les étapes suivantes :
recevoir une deuxième entrée d'une touche ou action sélectionnée par l'utilisateur sur le terminal de communication mobile, pendant que l'alarme de rappel est émise ;
régler un deuxième intervalle de temps d'alarme de rappel basé sur l'intervalle de temps de base et sur la deuxième entrée reçue de la touche ou action sélectionnée par l'utilisateur sur le terminal de communication mobile ;
attendre pendant une durée égale au deuxième intervalle de temps d'alarme de rappel ; et
délivrer une deuxième alarme de rappel.

3. Procédé selon la revendication 1, dans lequel l'intervalle de temps de base est mémorisé dans le terminal de communication mobile et réglé par le fabricant du terminal de communication mobile.

4. Procédé selon la revendication 1, dans lequel l'intervalle de temps de base est mémorisé dans le terminal de communication mobile et sélectionné par l'utilisateur du terminal de communication mobile en utilisant une option de menu.

5. Procédé selon la revendication 1, dans lequel l'alarme initiale est annulée quand la touche sélectionnée par l'utilisateur est une touche d'annulation d'alarme de réveil ou une touche "0".

6. Procédé selon la revendication 1, dans lequel l'alarme initiale et l'alarme de rappel sont des sons audibles.

7. Procédé selon la revendication 6, dans lequel le son audible de l'alarme initiale ou de l'alarme de rappel est choisi par l'utilisateur.

8. Procédé selon la revendication 6, dans lequel le volume du son audible de l'alarme initiale ou de l'alarme de rappel est choisi par l'utilisateur.

9. Procédé selon la revendication 6, dans lequel le son audible de l'alarme initiale est sélectionné par l'utilisateur, et dans lequel le son audible de l'alarme de rappel est différent du son audible de l'alarme initiale et est choisi par l'utilisateur.

10. Procédé selon la revendication 1, dans lequel au moins l'une des alarme initiale et alarme de rappel est une vibration du terminal de communication mobile.

11. Procédé selon la revendication 1, dans lequel l'émission (S210) de l'alarme initiale comprend les opérations suivantes :
recevoir une entrée de l'utilisateur concernant une heure d'alarme voulue pour délivrer une alarme initiale ;
recevoir une entrée de l'utilisateur concernant un format de sortie d'alarme voulu pour délivrer l'alarme initiale, dans lequel le format de sortie d'alarme voulu de l'utilisateur est sélectionné dans le terminal de communication mobile parmi une pluralité de sons différents et dans lequel la pluralité de sons différents comprend une pluralité de mélodies différentes, de sons de carillons ou d'avertisseurs différents et une vibration du terminal de communication mobile lui-même ; et
délivrer l'alarme initiale à l'heure d'alarme voulue de l'utilisateur sous la forme du format de sortie d'alarme voulu de l'utilisateur.

12. Procédé selon la revendication 11, comprenant en outre la réception d'une entrée de l'utilisateur concernant un volume de sortie voulu pour l'alarme initiale.

13. Procédé selon la revendication 11, comprenant en outre la réception d'une entrée de l'utilisateur concernant un format de sortie d'alarme voulu pour délivrer une alarme de rappel, dans lequel le format de sortie d'alarme voulu de l'utilisateur peut être choisi parmi une pluralité de sons différents, et il peut être choisi pour être différent du format de sortie d'alarme de l'alarme initiale.

14. Procédé selon la revendication 12, comprenant en outre la réception d'une entrée de l'utilisateur concernant un volume de sortie voulu pour l'alarme de rappel.

15. Terminal de communication mobile configuré pour fournir des alarmes basées sur le temps, dans lequel le terminal de communication mobile est adapté pour :
délivrer une alarme initiale ;
recevoir une entrée d'une touche ou action sélectionnée par l'utilisateur sur le terminal de communication mobile, pendant que l'alarme initiale est émise ;
régler un intervalle de temps d'alarme de rappel basé sur un intervalle de temps de base et sur l'entrée reçue de la touche ou action sélectionnée par l'utilisateur sur le terminal de communication mobile, dans lequel :
quand la touche sélectionnée par l'utilisateur est une touche de chiffre, le terminal de communication mobile est adapté pour régler l'intervalle de temps d'alarme de rappel en multipliant ou en additionnant une valeur associée à la touche sélectionnée par l'utilisateur avec l'intervalle de temps de base ; et
quand la touche sélectionnée par l'utilisateur n'est pas une touche de chiffre ou que l'utilisateur ouvre et ferme un clapet du terminal de communication mobile, le terminal de communication mobile est adapté pour régler l'intervalle de temps d'alarme de rappel pour qu'il soit égal à l'intervalle de temps de base ;
attendre pendant une durée égale à l'intervalle de temps d'alarme de rappel ; et
délivrer une alarme de rappel.

16. Terminal de communication mobile selon la revendication 15, dans lequel le terminal de communication mobile est en outre adapté pour :
recevoir une entrée de l'utilisateur concernant une heure d'alarme voulue pour délivrer une alarme initiale ;
recevoir une entrée de l'utilisateur concernant un format de sortie d'alarme voulu pour délivrer l'alarme initiale, dans lequel le format de sortie d'alarme voulu de l'utilisateur est sélectionné dans le terminal de communication mobile parmi une pluralité de sons différents et dans lequel la pluralité de sons différents comprend une pluralité de mélodies différentes, de sons de carillons ou d'avertisseurs différents et une vibration du terminal de communication mobile lui-même ; et
délivrer l'alarme initiale à l'heure d'alarme voulue de l'utilisateur sous la forme du format de sortie d'alarme voulu de l'utilisateur.
